# EUROPÄISCHE PATENTANMELDUNG

(11) **EP 2 450 821 A1**
(43) Veröffentlichungstag der Anmeldung: **09.05.2012**
(21) Anmeldenummer: 10190518.0
(22) Anmeldetag: 09.11.2010
(51) Int. Cl.: G06K 7/00

(54) **Mobiles Kartenterminal**

(71) Anmelder: GT German Telematics Gesellschaft für Telematikdienste mbH, 10789 Berlin (DE)
(72) Erfinder: Singh Jolly, Sandeep, 14055 Berling (DE)
(74) Vertreter: Boeckh, Tobias

(57) **Zusammenfassung**

Die Erfindung beschreibt ein mobiles Kartenterminal, welches über vier Kontaktiereinheiten für Chipkarten, einer flächensensorbasierten Eingabefunktion und einer Energieversorgung verfügt.

## Beschreibung

Die Erfindung betrifft ein mobiles Kartenterminal zur Auslesung von Chipkarten, wobei das Kartenterminal vier Chipkarten Kontaktiereinheit für eine Chipkarte, eine flächensensorbasierte Eingabemöglichkeit, mindestens eine USB-Schnittstelle und einen Energiespeicher aufweist.

Chipkarten werden in verschiedenen Bereichen als Speichermedium und zur Authentifizierung oder Identifizierung verwendet.

Bei den von den Krankenversicherungen an die Versicherten ausgegebenen Versichertenkarten handelt es sich in der Praxis um Speicherchipkarten, die üblicherweise mit einem Speicherchip mit einer Größe von 256 Bit ausgestattet sind. Dieses gilt für gesetzliche Krankenversicherungen wie für private Krankenversicherungen. Ein auf einer üblichen Versichertenkarte gespeicherter Datensatz besteht üblicherweise zumindest aus Kartennummer, Name des Versicherten, Adresse, Geburtsdatum, Versicherungsnummer, Versicherungsname, Versichertenstatus, Versichertennummer sowie gegebenenfalls Gültigkeitsdauer. Versicherungsnummer und Versicherungsname bzw. -bezeichnung identifizieren die jeweilige Krankenversicherung bzw. die entsprechende Niederlassung oder Filiale einer Krankenversicherung. Die Versichertennummer erlaubt die Identifizierung der versicherten Peron bei dieser Versicherung. Die Kartennummer erlaubt die Identifizierung einer einzelnen Chipkarte, die von der jeweiligen Versicherung ausgegeben wurde. Das Beschreiben des Speicherchips erfolgt durch die jeweilige Krankenversicherung, die dann die Versichertenkarte an den Versicherten ausgibt. Bei den jeweiligen Leistungserbringern (z. B. Ärzten) lassen sich die auf der Chipkarte gespeicherten personenbezogenen Daten mit einem Chipkartenlesegerät (oder Kartenterminal) in einen Rechner einlesen. Das Einlesen der Daten dient lediglich der vereinfachten Datenerfassung im Hause des Leistungserbringers sowie der Vereinfachung der späteren Abrechnung.

Im Übrigen sind im Bankenbereich EC-Karten auf Magnetstreifenbasis und Geldkarten bzw. Cashkarten mit einem Chip bekannt. Dabei handelt es sich um sogenannte SmartCards bzw. Mikroprozessorkarten, die einen Mikroprozessor (CPU) und darüber hinaus gegebenenfalls noch ROM, EEPROM, RAM und einen I/O-Port aufweisen. Die Verwendung derartiger Karten erfolgt häufig im Zusammenhang mit einer PIN-Code-Eingabe, um durch die Karte bereitgestellte Funktionen durch einen berechtigten Nutzer freizuschalten.

Chipkarten können u. a. als elektronische Geldbörse, SIM-Karte, Reisepass, E-Ticket, Personalausweis, Telefonkarte oder SmartCard eingesetzt werden.

Zum Auslesen der Chipkarten sind im Stand der Technik Kartenlesegeräte beschrieben. Die Kartenlesegeräte lesen nicht nur auf der Karte gespeicherte Daten, sondern können auch Daten auf die Karten schreiben oder Applikationen auf der Chipkarte ansteuern; daher spricht man auch von einem Chipkartenterminal.

Die Geräte versorgen die Chipkarte mit Strom, takten sie und etablieren die Kommunikation gemäß der unterstützten Parameter der Karte, welche die Karte über die ATR (Answer to Reset) dem Leser mitteilt. Die Chipkartenleser werden häufig nach dem Haupteinsatzgebiet unterschieden, wobei kein universell einsetzbarer Kartenleser beschrieben ist. Im Stand der Technik können die Kartenleser für Verwaltung und Finanzen, aber auch für den Mobilfunk eingesetzt werden.

Ausgehend von diesem Stand der Technik ist es die Aufgabe der vorliegenden Erfindung eine Kartenlesegerät bereitzustellen, welches nicht die Nachteile oder Mängel des Stands der Technik aufweist.

Gelöst wird die Aufgabe durch die unabhängigen Ansprüche. Vorteilhafte Ausführungsformen ergeben sich aus den Unteransprüchen.

Die Erfindung betrifft ein mobiles Kartenterminal, umfassend
a. ein manipulationssicheres Gehäuse,
b. eine flächensensorbasierte Eingabemöglichkeit,
c. mindestens eine USB Schnittstelle,
d. eine Energieversorgung
e. wenigstens vier Kontaktiereinheiten für Chipkarten zur Identifizierung, Authentifizierung, Speicherung, Verschlüsselung und/oder Dienstevermittlung,
wobei eine der Kontaktiereinheiten der Identifizierung und/oder Authentifizierung eines Benutzers dient, wobei eine weitere Kontaktiereinheit der Identifizierung und/oder Authentifizierung eines Dritten dient, wobei eine weitere Kontaktiereinheit der Identifizierung, Authentifizierung, Speicherung und/oder Dienstevermittlung mit einem Diensteanbieter dient und eine weitere Kontaktiereinheit der Speicherung und/oder Verschlüsselung dient.

Die Erfindung betrifft weiterhin ein mobiles Kartenterminal, umfassend
a. eine flächensensorbasierte Eingabemöglichkeit,
b. eine Kontaktiereinheit für Speicherkarten,
c. mindestens eine USB Schnittstelle,
d. mindestens zwei Chipkarten Kontaktiereinheiten für Chipkarten des Formats ID-1,
e. mindestens eine Chipkarten Kontaktiereinheit für eine Chipkarte des Formats ID-000 und,
f. eine Energieversorgung,
wobei bevorzugt Lese- und/oder Schreib-Zugriffe gleichzeitig ausführbar sind.

Das erfindungsgemäße Kartenterminal kann universell eingesetzt werden. Das Terminal verfügt über mindestens eine, bevorzugt zwei USB-Schnittstellen, eine vorteilhafterweise vom Typ A und eine vom Typ Micro B. Außerdem sind noch mindestens vier Chipkarten Kontaktiereinheiten zur Identifizierung, Authentifizierung, Speicherung, Verschlüsselung und/oder Dienstevermittlung vorhanden. Bevorzugt ist mindestens eine Kontaktiereinheit eine Kontaktiereinheit für Chipkarten des Formats ID-1 ist. Hierdurch können beispielsweise Daten einer Patientenkarte des Typs eGK, KVK und/oder des elektronischen Heilberufsausweis (HBA) ausgelesen und/oder gespeichert werden. Im Sinne der Erfindung bezeichnet eGK insbesondere eine elektronische Gesundheitskarte und KVK eine Krankenversicherungskarte. Ein Benutzer kann sich mit seiner Chipkarte an dem mobilen Kartenterminal identifizieren und/oder authentifizieren. Die kann beispielsweise mit einer HBA erfolgen. Weiterhin dient eine weitere Kontaktiereinheit der Identifizierung und/oder Authentifizierung eines Dritten. Die Kontaktiereinheit erkennt bevorzugt Chipkarten des Formats ID-1, wodurch beispielsweise EC-Karten oder KVK eines Dritten erkannt werden. Eine weitere Kontaktiereinheit dient der Identifizierung, Authentifizierung, Speicherung und/oder Dienstevermittlung mit einem Diensteanbieter. Bevorzugt erkennt die Kontaktiereinheit Chipkarten des Formats ID-000. Eine weitere Kontaktiereinheit dient der Speicherung und/oder Verschlüsselung, wobei es sich hierbei bevorzugt um eine Kontaktiereinheit für Speicherkarten, bevorzugt Flash-Speicherkarten insbesondere des Formats microSD, handelt. Hierdurch ist die gleichzeitige Auslesung und/oder das gleichzeitige Beschreiben und/oder das gleichzeitige Benutzen von kartenbasierten Diensten der Karten möglich, wobei alle erforderlichen Sicherheitsstandards eingehalten werden. Das Kartenterminal kann im Sinne der Erfindung auch als Gerät bezeichnet werden.

Die Abmessungen der Kontaktiereinheit der Chipkarte sind nach der Norm ISO 7816 standardisiert. Das Format ID-1 weist eine bevorzugte Größe von 85,725 mm x 53,975 mm auf, was beispielsweise bei EC-Karten, Telefonkarten, Führerschein oder Krankenversicherungskarte verwendet wird. Dahingegen weist das Format ID-000 eine bevorzugte Größe von 25 mm x 15 mm auf. Vorteilhafterweise kann das mobile Kartenterminal für einfache Speicherchipkarten, Prozessorchipkarten, Javakarten oder Basickarten verwendet werden, wobei auch Chipkarten-Applikationen nutzbar sind.

Eine Chipkarte des Formats ID-000 kann beispielsweise ein einrichtungsbezogener Ausweis im Gesundheitswesen sein, der zumindest den Dienst Authentifizierung beinhaltet und eine Versorgungseinrichtung (das Institut) mit den entsprechenden Rechten ausweist. Die deshalb auch als Institutionenkarte bezeichnete Karte ist ein bevorzugtes Signierinstrument mit einem institutionsspezifischen Zertifikat. Sie entspricht technisch weitgehend dem Heilberufsausweis, ist jedoch nicht personensondern institutionsbezogen und wird bevorzugt lediglich bei Systemstart mit einer PIN freigeschaltet. Die Karte kann ebenfalls als SMC (Security Module Card) bezeichnet werden und umfasst die SMC Typ-A, -B und -K. Die SMC Typ-B (SMC-B) bezeichnet insbesondere ein universelles Werkzeug, dass die Identität einer Institution in einer Telematikinfrastruktur abbildet, während die SMC Typ-A (SMC-A) bevorzugt innerhalb einer Institution zur Zuweisung von Rechten gegenüber der eGK übernimmt. Die SMC Typ-K (SMC-K) enthält vorteilhafterweise die notwendigen Zertifikate und Schlüsselpaare für einen Konnektor.

Eine USB-Schnittstelle (Universal Serial Bus) bezeichnet insbesondere ein serielles Bussystem zur Verbindung des Kartenterminals mit externen Geräten.

Eine Chipkarten Kontaktiereinheit bezeichnet im Sinne der Erfindung insbesondere eine Leseeinheit mit entsprechenden Kontakten zur Kommunikation mit Chipkarten.

Es ist bevorzugt, dass die flächensensorbasierte Eingabefunktion ein Touchscreen, insbesondere ein Flüssigkeitskristallbildschirm (engl.: liquid crystal display, LCD) ist. Der LCD weist eine geringe Leistungsaufnahme auf und der Bildinhalt wird über die gesamte Anzeigenfläche konstant beleuchtet. Außerdem kann ein flimmerfreies, verzerrungsfreies und scharfes Bild wiedergegeben werden. Ein weiterer Vorteil eines LCD ist, dass wenig Strahlung (z. B. Röntgenstrahlung oder Magnetstrahlung) abgestrahlt wird. Durch die Verwendung eines flächensensorbasierten LCD kann ein leichtes und tragbares Kartenterminal bereitgestellt werden.

In einer bevorzugten Ausführungsform ist die Anzeige ein TFT- oder LED-Display. Der Display oder die Anzeige kann vorteilhafterweise mit einem flächenbasierten, berührungsempfindlichen Sensor, umfassend kapazitiver oder resistiver Touchscreen ausgestaltet sein. Touchscreens sind auch als Tastschirm oder Sensorbildschirm bekannt. Derartige Eingabegeräte werden unter anderem in Smartphones, PDAs, Touchdisplays oder Notebooks eingesetzt. Im Sinne der Erfindung erfasst zunächst eine in dem Touchscreen verbaute Elektronik die Position einer Berührung auf dem Touchscreen und übermittelt die Information an ein Betriebsprogramm (z. B. eine Firmware). Das vergleicht die Information mit den Positionen der auf dem Touchscreen angezeigten Bedienelemente, beispielsweise einer Schaltfläche. Stimmen die Werte überein, wird ein Ereignis oder eine entsprechende Funktion ausgelöst. Ein Ereignis bezeichnet im Sinne der Erfindung insbesondere Dasjenige, was eine Aktion und damit eine Zustandsveränderung, bevorzugt innerhalb von Anwendungen, auslöst. Diese Ereignisse können beispielsweise Benutzereingaben oder Systemereignisse sein. Es kann auch bevorzugt sein, dass der Touchscreen mehrere Berührungen der Oberfläche gleichzeitig verarbeiten kann, was als Multitouch-Technik bezeichnet wird.

In einer bevorzugten Ausführungsform umfasst das Kartenterminal einen 4,3 Zoll großen LED hintergrundbeleuchteten sowie berührungssensitiven Touchscreen. Das Terminal weist vorzugsweise keine separate Tastatur oder Tastenfeld auf, wobei es auch bevorzugt sein kann, einen nicht-berührungsempfindlichen LED zu verbauen und das Gerät über Computereingabegeräte, umfassend Maus und/oder Tastenfeld, zu bedienen. Um einem Benutzer die Eingabe über den Tochscreen zu erleichtern, kann ein Eingabestift genutzt werden. Vorteilhafterweise ist das Display ein die Geräteoberseite ausfüllender berührungssensitiver TFT- oder LED-Bildschirm. Durch die bevorzugte Anordnung des Bildschirms auf der Geräteoberseite, ist keine Manipulation einer in dem Kartenterminal integrierten Platine möglich. Vorteilhafterweise sind alle wichtigen Leitungen auf der Platine in Richtung des Bildschirms oder der Energieversorgung gerichtet. Falls ein Aufbohren des Bildschirms erfolgt, wird dieser unweigerlich zerstört, was für einen Benutzer sofort sichtbar ist. Eine Manipulation der Platine ist somit nicht möglich. Das Kartenterminal erfüllt somit hohe Sicherheitszertifikate.

Weiterhin verfügt das Kartenterminal über einen Schalter zum Ein- und Ausschalten. Der Schalter kann an einer beliebigen Position am Terminal angeordnet sein, wobei eine seitliche Anordnung für die Handhabung des Terminals vorteilhaft ist.

Es ist bevorzugt, dass das Kartenterminal mindestens eine RFID-Schnittstelle (engl.: radio-frequency identification) aufweist. RFID ermöglicht die automatische Identifizierung und Lokalisierung von mit einem Transponder markierten Gegenständen und erleichtert damit erheblich die Erfassung von Daten.

Weiterhin ist es bevorzugt, dass das Kartenterminal mindestens einen Druckeranschluss aufweist.

In dem Kartenterminal, vorzugsweise auf der Rückseite dessen, unter einer Abdeckung, ist ein Energiespeicher angeordnet. Der Energiespeicher ist vorzugsweise derart in das Kartenterminal integriert, dass eine Manipulation der Platine durch ein Aufbohren des Gehäuses nicht möglich ist, da die Leitungen der Platine durch die Anordnung des Energiespeichers im Gehäuse von außen nicht zugänglich sind. Durch die Manipulation würde der Energiespeicher geschädigt, bzw. zerstört werden, was für einen Benutzer sofort erkennbar wäre. Ein Energiespeicher im Sinne der Erfindung dient dem Speichern von elektrischer Energie und kann beispielsweise Batterien umfassen. Es kann auch bevorzugt sein, einen Elektroenergiespeicher, beispielsweise einen Akkumulator (elektrochemischer Energiespeicher) in das Gehäuse zu integrieren. Es können auch wiederaufladbare Batterien verwendet werden. Hierdurch wird ein dauerhafter, mobiler und kostengünstiger Betrieb des Terminals sichergestellt. In einer bevorzugten Ausführungsform wird die Stromversorgung des Terminals bevorzugt über einen austauschbaren Lithium-Polymer-Akku (LiPo) gewährleistet. Der Akku kann vorteilhafterweise über eine Schnittstelle, beispielsweise einer Micro-USB Schnittstelle aufgeladen werden.

Um beispielsweise verschiedene Lade- bzw. Betriebszustände des Kartenterminals anzuzeigen, verfügt das Terminal bevorzugt über mindestens eine LED ("light emitting diode"). LEDs sind relativ unempfindlich gegenüber Erschütterungen, Stößen und selbst extrem häufigen Schaltvorgängen. Es ist ebenfalls vorteilhaft, wenn die LEDs in unterschiedlichen Farben leuchten, das heißt LEDs verwendet werden, die unterschiedliche Spektralfarben emittieren (mindestens zweifarbige LEDs).

Es ist bevorzugt, dass das Kartenterminal mindestens einen Lautsprecher und/oder Mikrofon enthält. Es kann so beispielsweise Musik wiedergegeben werden. Durch das Mikrofon können Sprachmemos aufgenommen werden. Es kann auch vorteilhaft sein, wenn das Kartenterminal über eine Sprachsteuerung verfügt, die über das Mikrofon steuerbar ist.

Das Gehäuse des Kartenterminals ist vorzugsweise aus einem Kunststoff gefertigt. Kunststoffe bezeichnen Materialien, deren wesentliche Bestandteile aus solchen makromolekularen organischen Verbindungen bestehen, die synthetisch oder durch Abwandeln von Naturprodukten entstehen. Sie sind in vielen Fällen unter bestimmten Bedingungen (Wärme u. Druck) schmelz- und formbar. Zu den Kunststoffen gehören auch Kautschuke und Chemiefasern. Auch die synthetischen Lackrohstoffe und die Klebstoffe können zu den Kunststoffen gezählt werden. Für die vorteilhafte Ausführungsform können Kunststoffe aus der Gruppe abgewandelte Naturstoffe, synthetische Kunststoffe (Polykondensate, Polymerisate, Polyaddukte), Duroplaste, und/oder ungesättigte Polyesterharze, umfassend Cellulosenitrat, Celluloseacetat, Cellulosemischester, Celluloseether, Polyamid, Polycarbonat, Polyester, Polyphenylenoxid, Polysulfon, Polyvinylacetal, Polyethylen, Polypropylen, Poly-1-buten, Poly-4-methyl-1-penten, lonomere, Polyvinylchlorid, Polyvinylidenchlorid, Polymethylmethacrylat, Polyacrylnitril, Polystyrol, Polyacetal, Fluor-Kunststoffe, Polyvinylalkohol, Polyvinylacetat, Poly-p-xylylen, lineare Polyurethane, chlorierte Polyether, Casein-Kunststoffe, Phenol-Harz, Harnstoff-Harz, Thioharnstoff-Harz, Melamin-Harz, Epoxidharz, vernetzte Polyurethane, Alkydharz, Allylharz, Silicon, Polyimid, und/oder Polybenzimidazol verwendet werden. Bevorzugt wird Acrylnitril-Butadien-Styrol (ABS) als Kunststoff verwendet. Es besitzt eine hohe Oberflächenhärte, eine gute Schlagfestigkeit und eine gute Ölbeständigkeit. Außerdem ist es desinfizierbar.

Das Gehäuse ist vorzugsweise verpresst und besteht aus zwei untrennbar verbundenen Teilen, wobei das Gehäuse auch aus mehreren, voneinander trennbaren Teilen bestehen kann. Es kann jedoch auch bevorzugt sein, dass das Gehäuse aus Metall gefertigt ist.

In einer bevorzugten Ausführungsform sind mindestens zwei Gehäusehälften miteinander verpresst. Durch das Verpressen der Gehäusehälften bevorzugt während der Montage, ist eine zerstörungsfreie Öffnung ausgeschlossen, wodurch ein manipulationssicheres Gehäuse bereitgestellt werden kann. Durch ein gewaltsames Öffnen des Gehäuses wird zum einen das erneute Zusammenfügen der beiden Gehäuseteile verhindert und zum anderen wird das Siegel, welches bevorzugt auf dem Gehäuse aufgebracht ist, zerstört. Das Siegel verändert nach gewaltsamer Zerstörung seine Farbe, was für Dritte deutlich erkennbar ist. Zusätzlich innen, mittig in der Gehäuseteilung liegende Plastikdome verhindern wirksam ein Zerschneiden (gewaltsames Öffnen) beider Gehäusehälften mit Präzisionswerkzeugen. Das Gehäuse besitzt bevorzugt auf seiner Rückseite einen Batteriefachdeckel, welcher durch einen Clipmechanismus zu öffnen und zu schließen ist. Im Batteriefach können sich vorteilhafterweise außer der Batterie zur Stromversorgung, z. B. der Slot (z. B. die Kontaktiereinheit für Chipkarten des Formats ID-000) für die SMC-Karte sowie die Kontaktiereinheit für Speicherkarten befinden. Bei der Kontaktiereinheit für Speicherkarten kann es sich beispielsweise um einen Kartenleser insbesondere für MicroSD Karten handeln. Es ist bevorzugt, dass die Kontaktiereinheit oder Slot für Chipkarten des Formats ID-000 durch einen dazu berechtigten Administrator versiegelt werden. Des Weiteren kann eine entsprechende Siegelfläche für ein BSI-Siegel (Bundesamt für Sicherheit in der Informationstechnik) hoher Sicherheitsstärke an einer Stelle des Gehäuses integriert werden.

Vorteilhafterweise kann das mobile Kartenterminal mit einem Cradle verbunden sein. Ein Cradle bezeichnet im Sinne der Erfindung eine Dockingstation oder Andockstation für das Kartenterminal. Um höchste Mobilität zu garantieren, lassen sich über das Cradle, welches bevorzugt mit einem Energiespeicher, z. B. einer Batterie und einer Datenkarte ausgerüstet ist, gesicherte Kommunikationskanäle zu entfernten Computersystemen aufbauen. Eine Datenkarte kann beispielsweise eine UMTS-Datenkarte oder UMTS-Stick sein, die bevorzugt mithilfe einer SIM-Karte eine Verbindung über das UMTS-Mobilfunknetz herstellt. Die Kommunikationskanäle könne bevorzugt dazu genutzt werden, dass Daten mithilfe abgesicherter Verbindungen übertragen werden. Dies kann beispielsweise über einen gesicherten VPN-Kanal (engl.: Virtual Private Network) erfolgen. Es kann jedoch auch bevorzugt sein, dass das Kartenterminal über mindestens eine drahtlose Kommunikationsschnittstelle verfügt.

Die Firmware des mobilen Kartenterminals verfügt vorteilhafterweise über alle erforderlichen Funktionalitäten. Die Firmware ermöglich es beispielsweise bis zu 200 Datensätze an VSD (Versichertenstammdaten) zu speichern. Die Datensätze können einzeln auf der Anzeige angezeigt werden. Die Firmware stellt eine Managementschnittstelle für einen Geräteadministrator zur Verfügung, mit welcher wichtige Einstellungen und Konfigurationen am Terminal vorgenommen werden können. Zusätzlich kann eine CT-API zur Verfügung gestellt werden (CT-API für externe Praxis-Software (AIS)). CT-API bezeichnet im Sinne der Erfindung insbesondere eine Schnittstelle für Chipkartenanwendungen (Card Terminal Application Programing Interface für Chipkartenanwendungen). Das Kartenterminal weist bevorzugt eine Software zur direkten Nutzung und/oder Weiterverarbeitung eingelesener Chipkartendaten auf. Es ist bevorzugt, dass nur eindeutig signierte Anwendungen auf dem Gerät laufen und von dem Benutzer keine weitere Software installiert werden kann.

Datensätze welche vorteilhafterweise mit einer CT-API z. B. an ein AIS- (Arzt Informations System) oder KIS-System (Krankenhaus Informations System) übergeben wurden, unterliegen bevorzugt nicht mehr der Hoheit der Kartenterminal Firmware. Die Daten stehen dann bevorzugt ausschließlich in der Folgeanwendung (Praxis-Software oder Mini-AIS) zur Verfügung.

Die Kartenterminal Firmware bietet einem Benutzer eine ansprechende Bedienoberfläche, welcher diese mittels des bevorzugten Touchscreens leicht und intuitiv bedienen kann. Durch z. B. große Piktogramme und Symbole ist eine vollständige Bedienung des Terminals ohne Eingabestift problemlos möglich. Die Firmware bietet dem Benutzer auch vorteilhafterweise die Möglichkeit, die Ausrichtung des Gerätedisplays zu ändern. Der Benutzer kann das Terminal somit in horizontaler oder vertikaler Ausrichtung bedienen. Es ist auch bevorzugt, dass die Displayausrichtung automatisch wechselt. Hierfür kann das Kartenterminal mit einem Lagesensor ausgestattet sein, der in Abhängigkeit der Lage des Terminals den Display anordnet.

Das Mini AIS läuft bevorzugt als eigenständige Applikation mit eingeschränkten Hardwarezugriffsrechten auf dem mobilen Kartenterminal. Durch eine eigens dafür vorgesehene CT-API kann die Applikation Mini AIS vorteilhafterweise auf VSD zugreifen und übernehmen. VSD, welche aus Patientenkarten ausgelesen wurden, können bevorzugt bis zur nächsten Synchronisierung mit dem Praxis-System durch die Kartenterminal Firmware verwaltet werden. Durch die bevorzugte MicroSD Karte, die in dem Card Reader als Speichermedium vorliegt, können große Datenmengen bzw. beliebige Zusatzanwendungen (z. B. Terminkalender, Rote Liste, ICD-10, Nachschlagewerk, GOÄ, Spiele, Weiterbildungsinstrumente, usw.) mobil verfügbar gemacht werden.

Das Kartenterminal kann bevorzugt zur Datenübermittlung und/oder Datenaufbereitung im Gesundheitswesen verwendet werden. Das Gesundheitssystem oder Gesundheitswesenbezeichnet im Sinne der Erfindung alle Personen, Organisationen, Einrichtungen, Regelungen und Prozesse, deren Aufgabe die Förderung und Erhaltung der Gesundheit sowie die Vorbeugung und Behandlung von Krankheiten und Verletzungen ist. Ein Arzt kann sich mit seinem HBA an dem Kartenterminal als Benutzer identifizieren und/oder authentifizieren, wobei ein Patient als Dritter ebenfalls identifiziert und/oder authentifiziert wird. Weiterhin kann eine weitere Kontaktiereinheit der Identifizierung, Authentifizierung, Speicherung und/oder Dienstevermittlung mit einem Diensteanbieter dienen. Hierbei kann es sich beispielsweise um eine Krankenkasse oder einer Einrichtung oder einer Instutition handeln. Vorteilhafterweise können mithilfe des Kartenterminals Daten (z. B. des Patienten) übermittelt oder Daten (z. B. des Patienten) aufbereitet werden.

Vorteile des Kartenterminals sind z. B.:
- gleichzeitiges Lesen von eGK / KVK und HBA möglich,
- eingesteckte Karten werden automatisch gelesen,
- bedienerfreundliches 4,3" Touchdisplay,
- spezifikationsgemäßes Anzeigen aller Notfalldaten eines Patienten möglich,
- lange Stand-by Zeiten (bis zu 300 h),
- austauschbarer Akku,
- mobile Signatur in der Ausbaustufe 2 vorgesehen,
- mobile PVS möglich,
- Gewicht: 179 g leicht,
- einfache Synchronisierung mit Ihrem Computer,
- bis zu 32GB Datenspeicher mit zusätzlicher Micro-SD Card,
- viele nützliche PVS-Apps auf Anfrage,
- an alle gängigen Praxisverwaltungs-Systeme angebunden und
- vorgesehen für den Basis-Rollout mit gematik und BSI Zertifizierung.

Im Folgenden soll die Erfindung anhand eines Beispiels erläutert werden, ohne jedoch auf das Beispiel beschränkt zu sein; es zeigt:

### Beispiel 1: Nutzung des Kartenterminals im Gesundheitswesen

### Hausbesuch

Ein Hausarzt nimmt das mit dem Praxis-System synchronisierte mobile Kartenterminal zu seinen Hausbesuchen mit. Beim Patienten angekommen, liest er dessen KVK oder eGK mit den darauf befindlichen VSD (Versicherungsstammdaten) über die Kartenterminal-Firmware ein. Um mehr über die Krankheitsgeschichte des Patienten zu erfahren, übergibt er dessen VSD per Tastendruck an das Mini AIS (Arzt Informations System), welches als Applikation auf dem mobilen Kartenterminal befindlich ist. Das Mini AIS sucht passend zu den VSD die im Praxis-System hinterlegten (und zuvor auf die MicroSD synchronisierten) Patientendaten und zeigt diese dem Arzt an. Dem Arzt können z. B. angezeigt werden:
- letzter Arztbesuch,
- verschriebene Medikamente,
- chronische Beschwerden,
- etc.

### Nutzungsszenario

Ein Hausarzt nimmt das mobile Kartenterminal zu seinen Hausbesuchen mit. Zusätzlich zu dem mobilen Kartenterminal verfügt er über ein Cradle zu diesem mobilen Kartenterminal in welchem sich eine zusätzliche Batterie sowie ein herkömmlicher UMTS-Stick befinden. Beim Patienten angekommen, liest er dessen KVK oder eGK mit den darauf befindlichen VSD über die Kartenterminal-Firmware ein. Um mehr über die Krankheitsgeschichte des Patienten zu erfahren, übergibt er dessen VSD per Tastendruck an das Mini AIS, welches als Applikation auf dem mobilen Kartenterminal läuft. Das Mini AIS baut über den angeschlossenen UMTS-Stick eine gesicherte Verbindung zum Praxis-System auf und ruft die dort hinterlegten Patientendaten ab und zeigt diese dem Arzt an. Dem Arzt können z. B. angezeigt werden:
- letzter Arztbesuch,
- verschriebene Medikamente,
- chronische Beschwerden,
- etc.

### Beispiel 2: Nutzung des Kartenterminals in einer Behörde

Ein Bürger identifitziert sich gegenüber einer Behörde mit Hilfe einer Identifikationseinheit, beispielsweise einer Chipkarte. Die Behörde nutzt zum Lesen dieser Identifikationseinheit ein mobiles Kartenterminal welches innerhalb der IT-Struktur der Behörde als sicheres Kartenterminal identifiziert ist. Ein Behördenmitarbeiter identifiziert sich gegenüber dem Kartenterminal, als berechtigte Person zum Einlesen der Bürgerdaten. Das Einlesen der Bürgerdaten kann auch drahtlos erfolgen.

### Beispiel 3: Nutzung des Kartenterminals in einer Firma

Ein Mitarbeiter einer Firma nutzt ein mobiles Kartenterminal um drahtlos auf die sichere IT-Infrastruktur der Firma zugreifen zu können. Hierfür nutzt er ein Kartenterminal welches sich gegenüber der IT-Infrastruktur identifiziert und somit einen abgesicherten Kommunikationspfad zu einer Datenverarbeitungseinheit innerhalb des Firmennetzes aufbaut. Um das Kartenterminal in Betrieb nehmen zu können, muss sich der Mitarbeiter durch eine Identifikationseinheit dem Kartenterminal gegenüber identifizieren.

### Beispiel 4: Nutzung des Kartenterminals zum Bereitstellen einer Signatur

Eine Person nutzt eine Identifikationseinheit um auf einem mobilen Kartenterminal Daten mit einer qualifizierten elektronischen Signatur zu versehen. Die zu signierenden Daten befinden sich dazu auf einem Speicher welcher der Hoheit des mobilen Kartenterminals unterliegt. Die Identifikationseinheit kann auf einer drahtlos arbeitenden Technik, oder auf einer Chipkarte beruhen.

### Beispiel 5: Nutzung des Kartenterminals zum Bereitstellen einer remote Signatur

Eine Person nutzt eine Identifikationseinheit um mit Hilfe eines mobilen Kartenterminals Daten mit einer qualifizierten elektronischen Signatur zu versehen. Die zu signierenden Daten befinden sich dazu auf einem Speicher, zu welchem zuvor durch das mobile Kartenterminal ein abgesicherter Kommunikationskanal aufgebaut wurde. Die Identifikationseinheit kann auf einer drahtlos arbeitenden Technik, oder auf einer Chipkarte beruhen.

### Beispiel 6: Nutzung des Kartenterminals zum Bereitstellen einer mehrfach Signatur

Zwei Personen nutzen Identifikationseinheiten um auf einem mobilen Kartenterminal Daten mit einer qualifizierten elektronischen Signatur zu versehen. Die zu signierenden Daten befinden sich dazu auf einem Speicher welcher der Hoheit des mobilen Kartenterminals unterliegt. Die Identifikationseinheiten können auf einer drahtlos arbeitenden Technik, oder auf einer Chipkarte beruhen.

### Beispiel 7: Nutzung des Kartenterminals zum Bereitstellen einer mehrfach remote Signatur

Zwei Personen nutzen Identifikationseinheiten um auf einem mobilen Kartenterminal Daten mit einer qualifizierten elektronischen Signatur zu versehen. Die zu signierenden Daten befinden sich dazu auf einem Speicher zu welchem zuvor durch das mobile Kartenterminal ein abgesicherter Kommunikationskanal aufgebaut wurde. Die Identifikationseinheiten können auf einer drahtlos arbeitenden Technik, oder auf einer Chipkarte beruhen.

### Beispiel 8: Nutzung des Kartenterminals zum Bereitstellen einer Verschlüsselung

Eine Person nutzt eine Identifikationseinheit, um Daten auf einem mobilen Kartenterminal mit einem kryptografischen Verfahren hoher Mechanismenstärke zu verschlüsseln. Die Daten befinden sich dazu auf einem Speicher welcher der Hoheit des mobilen Kartenterminals unterliegt.

### Beispiel 9: Nutzung des Kartenterminals zum Bereitstellen einer remote Verschlüsselung

Eine Person nutzt eine Identifikationseinheit, um Daten auf einem mobilen Kartenterminal mit einem kryptografischen Verfahren hoher Mechanismenstärke zu verschlüsseln. Die Daten befinden sich dazu auf einem Speicher zu welchem zuvor durch das mobile Kartenterminal ein abgesicherter Kommunikationskanal aufgebaut wurde.

### Beispiel 10: Nutzung des Kartenterminals für Bezahlvorgänge

Zwei Personen nutzen ein mobiles Kartenterminal, um einen Geldbetrag von der Bank-Chipkarte der einen, auf die Bank-Chipkarte der anderen Person transferieren zu können. Um dies zu tun nutzen sie ein mobiles Kartenterminal mit 2 Chipkartenslots gegenüber welchem Sie sich durch Eingabe Ihrer PIN oder durch drahtlose Authentifizierung mittels personalisierter Identifikationseinheiten, identifizieren. Das Gerät transferiert auf elektronischem Wege einen zuvor bestätigten Betrag von einer eingesteckten Chipkarte auf eine andere eingesteckte Chipkarte.

Die Erfindung wird nunmehr anhand von Figuren beispielhaft beschrieben, ohne jedoch auf diese beschränkt zu sein; es zeigt:

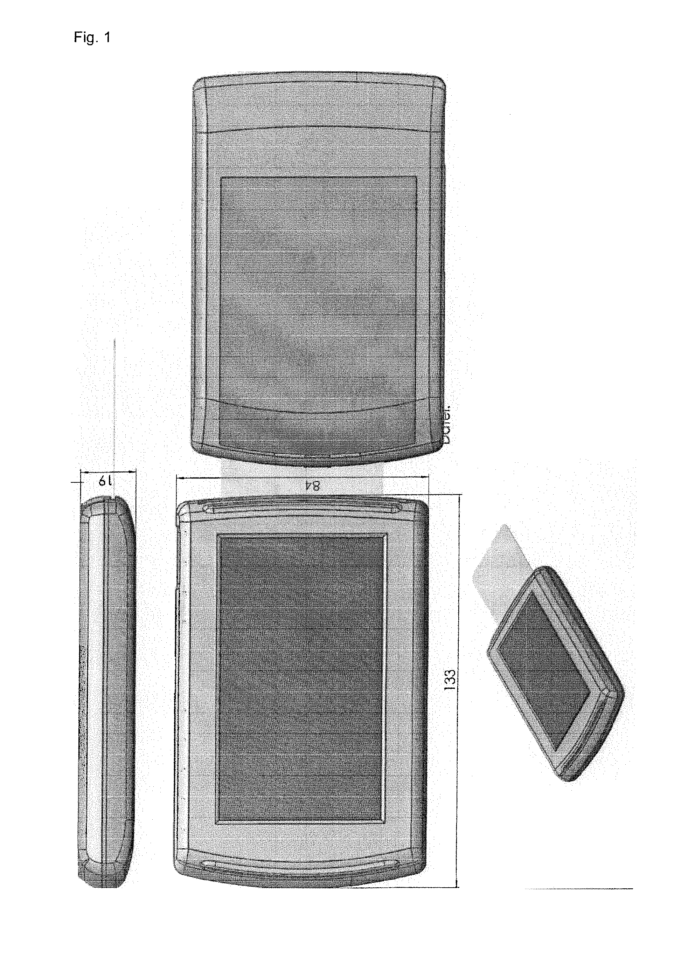

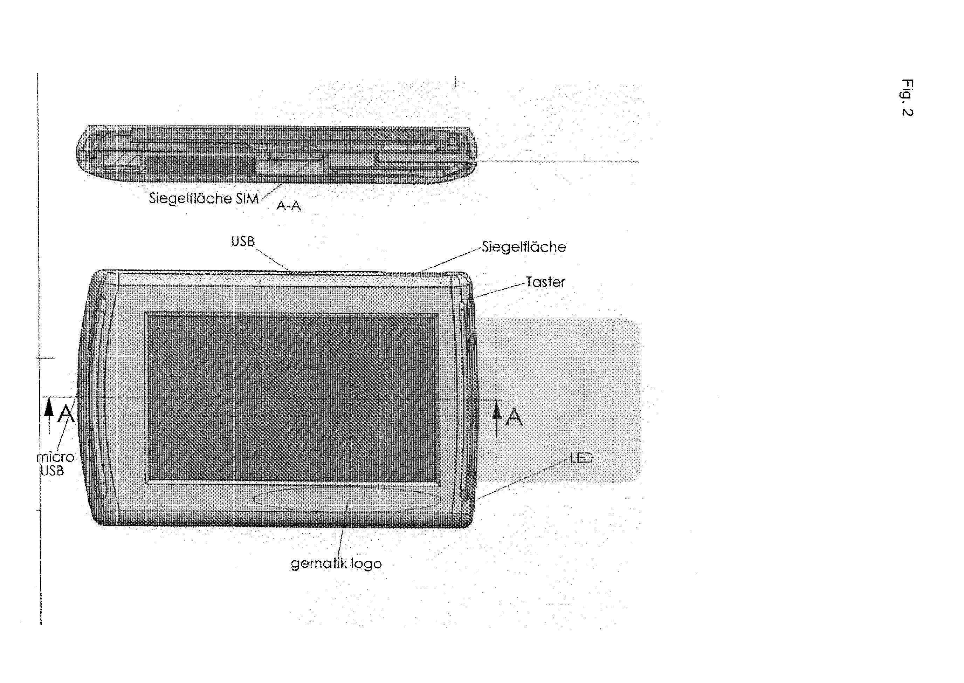

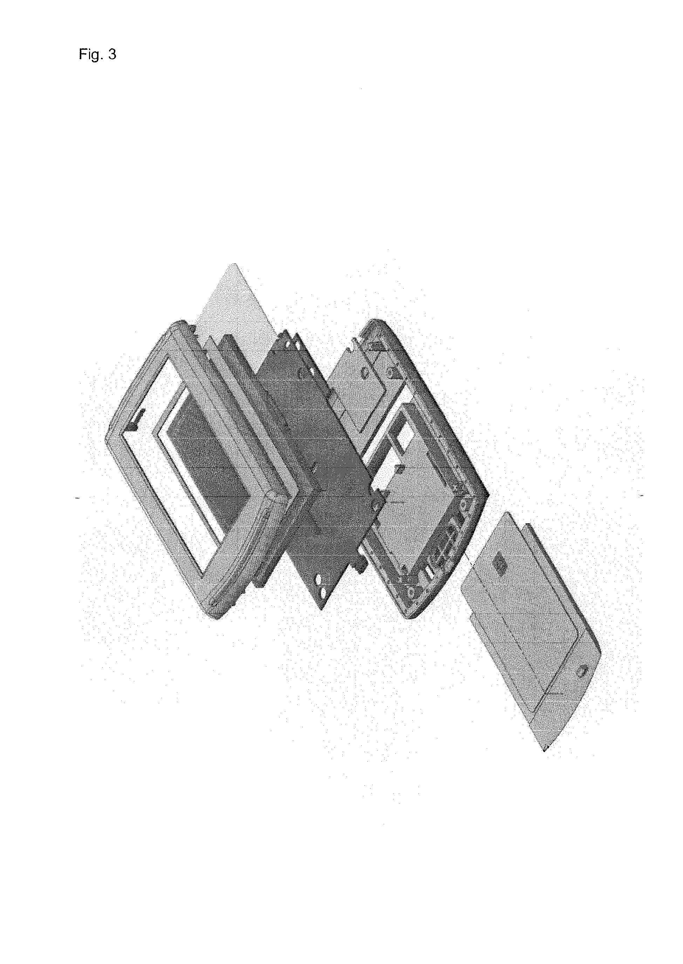

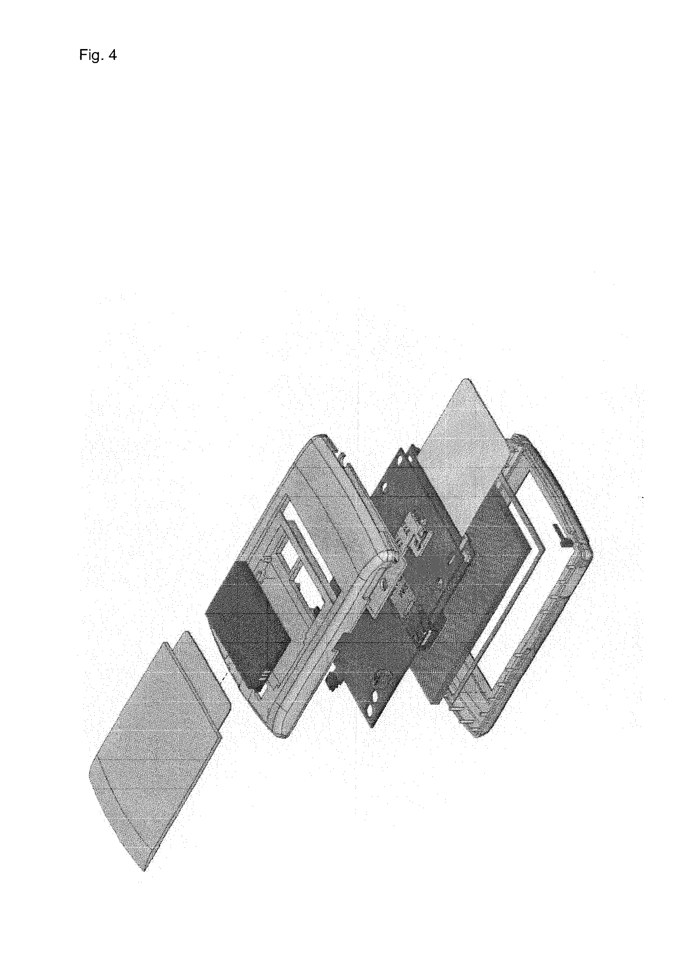

- Figur 1 bis Fig. 4: Schematische Darstellungen eines Kartenterminal

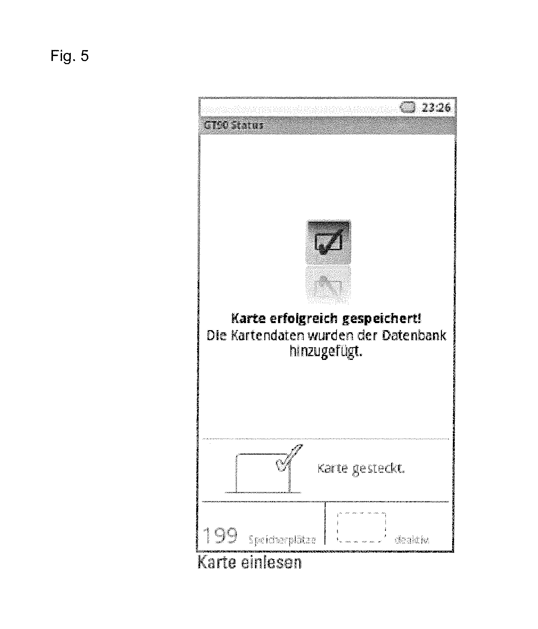

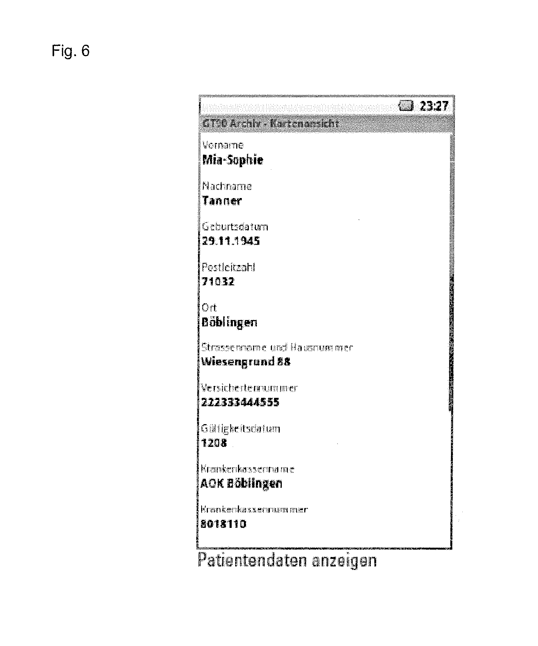

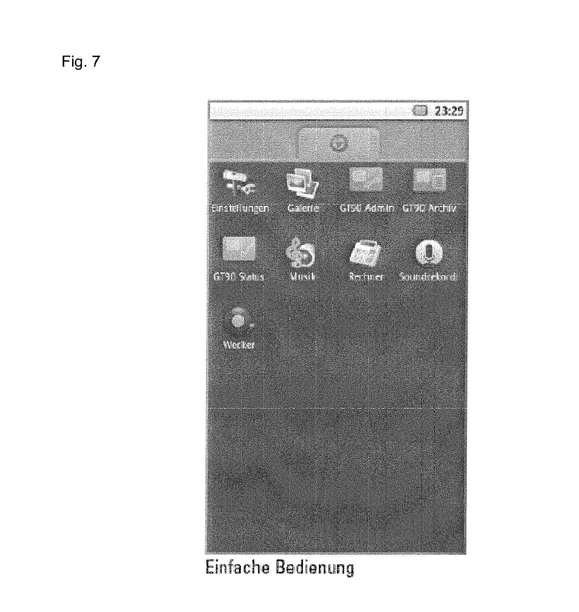

- Fig. 5 bis Fig. 7: Darstellungen der Bedienoberfläche eines Kartenterminals

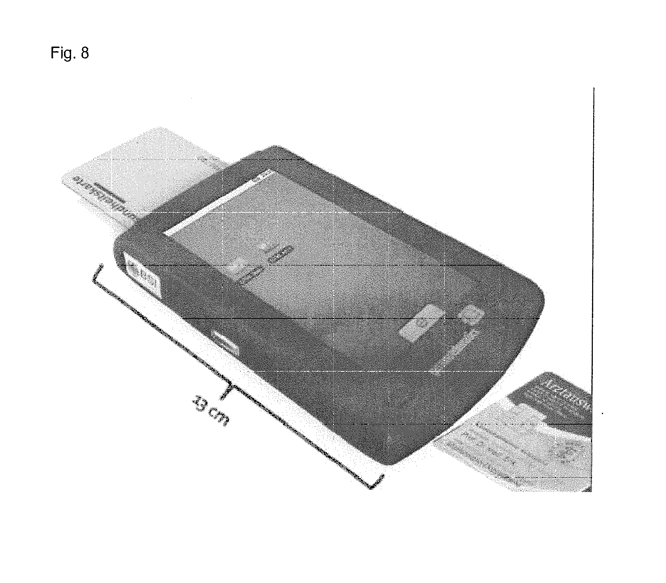

- Fig. 8: Bevorzugtes Kartenterminal

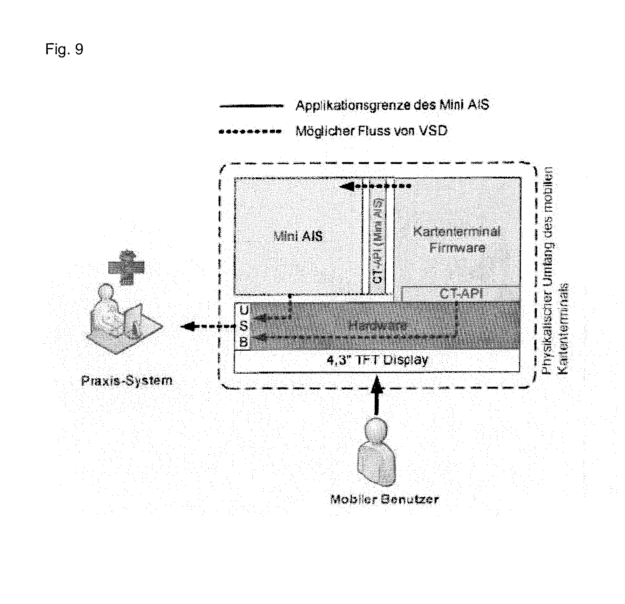

- Fig. 9: Bevorzugte Softwarestruktur eines Kartenterinals

Die Figuren zeigen eine bevorzugte Ausführungsform des Kartenterminals. Die Maße und das Gewicht betragen bevorzugt 8 cm x 13 cm x 1,6 cm / ca. 179 g (inkl. Batterie). Das Kartenterminal wird bevorzugt von ARM / 32-bit high performance RISC / 293 MIPS @ 266 MHz CPU/Prozessor betrieben. Das Betriebssystem ist vorteilhafterweise Android 2.1 / Linux 2.6.x. Der Speicher kann 64 MB SDRAM und 256 MB Flash betragen, wobei ein externer FLASH Speicher (MicroSD HC mit bis zu 32GB (microSD Card Reader - Hinge Typ)) anschließbar ist. Das Kartenterminal verfügt über zahlreiche Schnittstellen, u. a. USB: 1 x Full Speed Host / USB 2.0 kompatibel / Typ A und 1 x Full Speed Client / USB 2.0 kompatibel / Typ Micro B. Es können von dem Kartenterminal folgende Karten und Protokolle gelesen werden: KVK, eGK, HBA, SMC, SM-KT, ISO 7816 Klasse A-, B- und C-Karten (5V, 3V, 1,8V) Unterstützung der Protokolle S=8, S=9, S=10, T=0, T=1. Hierfür verfügt das Kartenterminal bevorzugt über 1 x Chipkarten Kontaktiereinheit gemäß ISO 7816 ID-1 für eGK oder KVK, 1 x Chipkarten Kontaktiereinheit gemäß ISO 7816 ID-1 für HBA, 1 x Kontaktiereinheiten gemäß ISO 7816 ID-000 für SMC-A oder SMC-B (> 100 000 Steckzyklen für ID-1 Kontaktiereinheiten insbesondere eGK/KVK) und weist eine automatische Kartenerkennung mit Kurzschluss- und Überhitzungsschutz auf. Das wird vorzugsweise von einem touchfähigen 4,3" TFT Display (resistiver Touchscreen) mit einer Auflösung von 480xRGBx272 gebildet. Das Display verfügt bevorzugt über eine stromsparende LED Hintergrundbeleuchtung, wobei eine Eingabe über Finger oder einen Eingabestift möglich ist. Das Gehäuse des Kartenterminals besteht vorzugsweise aus einem verpressten, zweiteiligen, untrennbaren ABS Kunststoffgehäuse, welches desinfizierbar ist und in den Farben weiß oder schwarz herstellbar ist. Der Batteriefachdeckel ist vorzugsweise mit einer Clipmechanik versehen. Das Gehäuse kann in einem hochwertigem hochglanzfinish ausgeführt werden. Das Gehäuse verfügt bevorzugt über einen EIN/AUS Schalter mit Sleepfunktion und zwei weiteren Bedientasten. Außerdem weist das Gehäuse optische und/oder akustische Signalinterfaces auf, umfassend mehrfarben LED (bspw. rot/grün) zur Anzeige von Betriebs- und Ladezuständen und einem eingebauten Lautsprecher und Mikrofon. Die Stromversorgung des Kartenterminals kann durch einen austauschbaren Lithium Polymer Akku sichergestellt werden, der beispielsweise über einen Mini USB Port geladen wird.

## Patentansprüche

1. Mobiles Kartenterminal, umfassend
a. ein manipulationssicheres Gehäuse,
b. eine flächensensorbasierte Eingabemöglichkeit,
c. mindestens eine USB Schnittstelle,
d. eine Energieversorgung,
e. wenigstens vier Kontaktiereinheiten für Chipkarten zur Identifizierung, Authentifizierung, Speicherung, Verschlüsselung und/oder Dienstevermittlung,
wobei eine der Kontaktiereinheiten der Identifizierung und/oder Authentifizierung eines Benutzers dient, wobei eine weitere Kontaktiereinheit der Identifizierung und/oder Authentifizierung eines Dritten dient, wobei eine weitere Kontaktiereinheit der Identifizierung, Authentifizierung, Speicherung und/oder Dienstevermittlung mit einem Diensteanbieter dient und eine weitere Kontaktiereinheit der Speicherung und/oder Verschlüsselung dient.

2. Mobiles Kartenterminal nach Anspruch 1,
**dadurch gekennzeichnet, dass**
die Eingabemöglichkeit ein Flüssigkeitskristallbildschirm ist.

3. Mobiles Kartenterminal nach Anspruch 1 oder 2,
**dadurch gekennzeichnet, dass**
das Kartenterminal mindestens einen Lautsprecher und/oder Mikrofon enthält.

4. Mobiles Kartenterminal nach einem oder mehreren der vorherigen Ansprüche,
**dadurch gekennzeichnet, dass**
mindestens eine Kontaktiereinheit eine Kontaktiereinheit für Chipkarten des Formats ID-1 ist.

5. Mobiles Kartenterminal nach einem oder mehreren der vorherigen Ansprüche,
**dadurch gekennzeichnet, dass**
mindestens eine Kontaktiereinheit eine Kontaktiereinheit für Chipkarten des Formats ID-000 ist.

6. Mobiles Kartenterminal nach einem oder mehreren der vorherigen Ansprüche,
**dadurch gekennzeichnet, dass**
mindestens eine Kontaktiereinheit eine Kontaktiereinheit für Speicherkarten ist.

7. Mobiles Kartenterminal nach einem oder mehreren der vorherigen Ansprüche,
**dadurch gekennzeichnet, dass**
das Kartenterminal mindestens eine RFID-Schnittstelle aufweist.

8. Mobiles Kartenterminal nach einem oder mehreren der vorherigen Ansprüche,
**dadurch gekennzeichnet, dass**
das Kartenterminal mindestens einen Druckeranschluss aufweist.

9. Mobiles Kartenterminal nach einem oder mehreren der vorherigen Ansprüche,
**dadurch gekennzeichnet, dass**
das Kartenterminal mindestens einen Lagesensor enthält.

10. Mobiles Kartenterminal nach einem oder mehreren der vorherigen Ansprüche,
**dadurch gekennzeichnet, dass**
das Kartenterminal über Spracheingabe steuerbar ist.

11. Mobiles Kartenterminal nach einem oder mehreren der vorherigen Ansprüche,
**dadurch gekennzeichnet, dass**
das Kartenterminal mindestens eine drahtlose Kommunikationsschnittstelle aufweist.

12. Mobiles Kartenterminal nach einem oder mehreren der vorherigen Ansprüche,
**dadurch gekennzeichnet, dass**
das Kartenterminal mit einem Cradle verbunden ist.

13. Verwendung des Kartenterminals nach den Ansprüchen 1 bis 12 zur Datenübermittlung und/oder Datenaufbereitung im Gesundheitswesen.

14. Verwendung des Kartenterminals nach Anspruch 13 zur Durchführung qualifizierter elektronischer Signaturen.

15. Verwendung nach einem oder mehreren der vorherigen Ansprüche, wobei das Kartenterminal eine Software zur direkten Nutzung und/oder Weiterverarbeitung eingelesener Chipkartendaten aufweist.
